(19)

Europäisches
Patentamt
European
Patent Office
Office européen
des brevets

(11)     EP 4 663 499 A1

(12)     EUROPEAN PATENT APPLICATION

(43) Date of publication:
17.12.2025  Bulletin 2025/51

(21) Application number: 24181873.1

(22) Date of filing: 13.06.2024

(51) International Patent Classification (IPC):
B60W 50/00 (2006.01)     B60W 60/00 (2020.01)
G08G 1/0968 (2006.01)

(52) Cooperative Patent Classification (CPC):
B60W 60/0025; B60W 50/00; G08G 1/207;
B60W 2050/0062; B60W 2050/0095;
B60W 2300/125; B60W 2300/15; B60W 2552/35;
B60W 2552/40; B60W 2556/45; B60W 2720/403;
B60W 2756/00; B60W 2756/10; B60Y 2200/142

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Volvo Autonomous Solutions AB
405 08 Göteborg (SE)

(72) Inventors:
• SJÖBERG, Johan
722 19 VÄSTERÅS (SE)
• SKILLSÄTER, Calle
644 36 TORSHÄLLA (SE)

(74) Representative: Kransell & Wennborg KB
P.O. Box 2096
403 12 Göteborg (SE)

(54)     **SYSTEM AND METHOD FOR CONTROLLING ONE OR MORE VEHICLES**

(57)     The present disclosure relates to a computer system (100) for controlling one or more vehicles (10, 10a to 10n) operating in a confined geographical area (200), the computer system comprising processing circuitry (102) configured to receive travel mission data for at least one vehicle (10a) of a plurality of vehicles within the confined geographical area, the travel mission data comprising at least data about an intended route (220) for completing a transport mission (212); obtain real-time road condition data for the intended route; based on the obtained real-time road condition data, determine a drivability impact for the at least one vehicle intended to perform the travel mission along the intended route, the drivability impact being indicative of an estimated decrease in any one of a vehicle traction control level and an energy efficiency level; in response to the determined drivability impact, adapt any one of a driving mode and load capacity for the travel mission for the at least one vehicle; and control the at least one vehicle based on any one of the adapted driving mode and adapted load capacity for the travel mission.

Fig. 1A

Fig. 1B

**EP 4 663 499 A1**

(Cont. next page)

Fig. 1C

## Description

## TECHNICAL FIELD

The disclosure relates generally to the field of controlling one or more vehicles operating in a confined geographical area, such as one or more heavy-duty vehicles operating in a confined area. In particular aspects, the disclosure relates to a computer system, vehicle and methods for controlling one or more vehicles operating in a confined geographical area. The disclosure can be applied to heavy-duty vehicles, such as trucks, buses, and construction equipment, among other vehicle types. In particular, the disclosure can be applied to autonomous vehicles, such as unmanned autonomous vehicles operating in a confined geographical area. Although the disclosure may be described with respect to a particular vehicle, the disclosure is not restricted to any particular vehicle.

## BACKGROUND

Autonomous vehicles have witnessed widespread adoption in various industries, transforming efficiency and safety in tasks such as material transport and handling in confined geographical areas, e.g., transportation of bulk material from a loading zone to an unloading zone. However, challenges persist when deploying autonomous vehicles during changing environmental conditions, on varying road conditions, as well as in hilly terrains in the confined geographical area. By way of example, hilly terrains introduce complexities in navigation, requiring vehicles to adapt to varying inclines and declines while maintaining operational performance. In confined spaces, such as loading areas, the maneuverability of autonomous vehicles may also become a critical factor for avoiding collisions and ensuring the safety of both equipment and personnel.

Moreover, autonomous vehicles, such as autonomous heavy-duty vehicles (e.g., haulers, trucks, and semi-trailer vehicles), are designed to carry heavy loads. The heavily laden vehicles must be able to start from standstill, even in uphill conditions, accelerate on various types of road surfaces, as well as brake in a controlled and reliable manner at all times. It may also be important that the vehicle can be operated within the confined geographical area in an energy-efficient manner without unnecessary component wear.

Thus, there is a continuing need for further improvements in the vehicle control and motion management of heavy-duty vehicles, such as autonomous vehicles operating in a confined geographical area.

## SUMMARY

According to a first aspect of the disclosure, there is provided a computer system for controlling one or more vehicles operating in a confined geographical area, the computer system comprising processing circuitry configured to: receive travel mission data for at least one vehicle of a plurality of vehicles within the confined geographical area, the travel mission data comprising at least data about an intended route for completing a transport mission; obtain real-time road condition data for the intended route; based on the obtained real-time road condition data, determine a drivability impact for the at least one vehicle intended to perform the travel mission along the intended route, the drivability impact being indicative of an estimated decrease in any one of a vehicle traction control level and an energy efficiency level; in response to the determined drivability impact, adapt any one of a driving mode and load capacity for the travel mission for the at least one vehicle; and control the at least one vehicle based on any one of the adapted driving mode and adapted load capacity for the travel mission.

The first disclosure is based on the insight that operating one or more vehicles within confined geographical areas can lead to challenges in terms of maintaining energy efficiency, productivity, and vehicle longevity.

The first aspect of the disclosure may seek to manage the inefficiencies and challenges associated with vehicle operations in varying and unpredictable environments. By determining the drivability impact, indicative of an estimated decrease in traction control and/or energy efficiency and considering external factors such as road conditions and mission requirements, the computer system enables real-time adjustments to the vehicle settings. Such configuration of the computer system may not only respond to the current operational states but may typically also consider future conditions, thereby enabling fine-tuning of the performance of the vehicle(s) across a range of situations. By processing travel mission data and real-time road condition, and then adjusting driving modes and load capacities, the disclosed computer system provides for controlling at least one vehicle based on the adapted driving mode and/or load capacity for the travel mission. In this manner, it becomes possible to control the vehicle in a more favorable manner, which may not only have a positive impact on the operations of the vehicle, but also on the wear of the vehicle as well as on the wear of the roads within the confined geographical area.

A technical benefit may include the management of energy consumption through the adjustment of drivability factors such as traction control levels and load capacity, contributing to improved vehicle efficiency and reduced operational costs. Furthermore, the adjustment of driving modes and the distribution of traction force according to real-time and anticipated road conditions aim to enhance vehicle productivity by ensuring smoother, faster, and safer completion of transport missions. Additionally, by moderating the strain on vehicle components through adjusted operation parameters, the proposed computer system contributes to reduce wear and tear, thereby extending the service life of the vehicle and decreasing the frequency of maintenance and repair.

To this end, the proposed computer system allows for improving the control of an autonomous vehicle in a confined geographical area containing a variable topography. Moreover, the proposed computer system allows for a more sustainable and cost-effective utilization of vehicle fleets in confined geographical areas.

Optionally in some examples, including in at least one preferred example, the processing circuitry may be configured to obtain real-time road condition data for the intended route from any one of the vehicles intended to perform the travel mission and a central control server in communication with the processing circuitry. A technical benefit may include enhanced responsiveness and precision in adapting to changing road conditions, which can lead to a more efficient use of energy and improved vehicle productivity.

Optionally in some examples, including in at least one preferred example, based on the obtained real-time road condition data, the processing circuitry may be further configured to determine a drivability impact for at least one additional vehicle among the plurality of vehicles, in response to the determined drivability impact for the at least one additional vehicle, adapt any one of a driving mode and load capacity for the travel mission for the at least one additional vehicle, and control the at least one vehicle and the at least one additional vehicle in accordance with respective adapted driving mode and adapted load capacity for the travel mission.. A technical benefit may include the capability to dynamically adjust the driving operations for multiple vehicles based on the conditions experienced by any other vehicle, potentially improving overall fleet efficiency, enhancing safety, and reducing energy consumption. The driving operations can be adjusted by processing circuitry on each vehicle, or by a central control server in communication with processing circuitry on each vehicle.

Optionally in some examples, including in at least one preferred example, the drivability impact indicative of an estimated decrease in vehicle traction control level may be any one of an increase in wheel slip and a decrease in a ratio between torque requirement and acceleration on a traction electric machine. A technical benefit may include improved vehicle stability and safety by reducing potential impacts from wheel slip and enhancing torque distribution, which can also contribute to lower energy consumption and reduced mechanical stress on the vehicle.

Optionally in some examples, including in at least one preferred example, the energy efficiency level may be determined from energy consumption data for performing the transport mission. A technical benefit may include providing a more precise measure and improving energy use across various transport missions, leading to reductions in operational costs and environmental impact.

Optionally in some examples, including in at least one preferred example, the processing circuitry may be configured to adapt the driving mode by adapting a traction force distribution between a front axle and a rear axle. A technical benefit may include enhanced driving performance and energy efficiency through enhanced distribution of traction force, which can adapt to different road conditions and vehicle loads, thereby reducing unnecessary energy expenditure and improving vehicle longevity.

Optionally in some examples, including in at least one preferred example, the processing circuitry may be configured to adapt the traction force distribution between the front axle and rear axle by controlling a differential lock device. A technical benefit may include the ability to maintain adequate traction in varying driving conditions, thereby enhancing driving performance in challenging road conditions, such as muddy terrain. Such control configuration may also have a positive impact on vehicle stability and safety. Optionally in some examples, including in at least one preferred example, the processing circuitry may be configured to control the differential lock to distribute the torque between opposite wheels of an axle. For example, the processing circuitry may be configured to control the differential lock to distribute the torque between a left wheel and a right wheel of an axle, such as the rear axle or the front axle.

Optionally in some examples, including in at least one preferred example, the processing circuitry may be configured to adapt the driving mode by adapting a maximum steering angle of a steering device for one or more wheels. A technical benefit may include improved maneuverability and safety, especially in confined spaces or challenging road conditions, which can lead to more efficient route completion and lower risk of vehicle damage.

Optionally in some examples, including in at least one preferred example, the processing circuitry may be configured to adapt the load capacity by reducing a maximum allowable load level. A technical benefit may include the ability to adapt vehicle performance to current driving conditions and vehicle status, ensuring safety and energy efficiency by preventing overloading and its negative impacts on vehicle dynamics and wear. Another technical benefit may include the ability to avoid operational interruptions, such as immobilization. For example, a machine fully loaded is more likely to experience movement impediments in conditions such as muddy terrain, compared to a less loaded machine.

Optionally in some examples, including in at least one preferred example, the processing circuitry may be configured to determine at least one vehicle pathway characteristic for the intended route for the transport mission based on topology data. A technical benefit may include enhanced route planning that take into account the specific characteristics of the route, such as gradients and curves, which can improve energy efficiency and reduce the risk of accidents.

Optionally in some examples, including in at least one preferred example, the travel mission data may further comprise data indicative of at least a destination location and a destination time. A technical benefit may include improved logistics and time management, allowing for more efficient scheduling of transport missions which can lead to improved energy usage and increased productivity.

Optionally in some examples, including in at least one preferred example, the processing circuitry may be configured to determine the decrease in any one of the vehicle traction control level and the energy efficiency level based on an estimation of an absolute value of any one of the vehicle traction control level and the energy efficiency level. A technical benefit may include a more nuanced control over vehicle dynamics and energy use, enabling fine-tuned adjustments to driving modes that cater to the specific requirements of each mission, thus improving performance and reducing operational costs.

Optionally in some examples, including in at least one preferred example, the processing circuitry may be configured to determine the decrease in any one of the vehicle traction control level and the energy efficiency level based on a comparison with a nominal value associated with normal driving conditions. A technical benefit may include the establishment of a benchmark for improved vehicle performance, against which real-time adjustments can be made to ensure that vehicles are operating at peak efficiency, thus minimizing, or at least reducing energy waste and enhancing safety.

Optionally in some examples, including in at least one preferred example, the plurality of vehicles may comprise a first vehicle and a second vehicle, the at least one vehicle being the second vehicle, and wherein the processing circuitry is configured to control the first vehicle according to a first route so that the first vehicle is controlled to establish a first track along the road surface of the first route, and further configured to control the second vehicle so as to follow the first track of the first vehicle. A technical benefit may include improved coordination and efficiency in fleet operations by leveraging the pathfinding and condition assessments of leading vehicles, which can minimize, or at least reduce, overall energy consumption and enhance the safety of following vehicles.

For example, the processing circuitry may be configured to control the second vehicle in response to any one of obtained real-time road condition data for the intended route of the first vehicle, real-time positioning data of the first vehicle and a combination of real-time road condition data for the intended route of the first vehicle and obtained real-time for the intended route of the second vehicle, so as to follow the first track of the first vehicle.

Optionally in some examples, including in at least one preferred example, a lateral offset of a track for the second vehicle may be adjusted in response to any one of the first track of the first vehicle and real-time road condition data for the first vehicle. A technical benefit may include the ability to dynamically adjust the positioning of following vehicles to enhance road space usage and avoid hazards, further contributing to safety and efficiency in vehicle convoys. Such adjustment may also provide for improved traction control of the second vehicle.

According to a second aspect of the disclosure, there is provided a vehicle comprising the computer system according to the first aspect. The second aspect of the disclosure may seek to solve the same problem as described for the first aspect of the disclosure. Thus, effects and features of the second aspect of the disclosure are largely analogous to those described above in connection with the first aspect of the disclosure.

According to a third aspect of the disclosure, there is provided a computer-implemented method for controlling one or more vehicles operating in a confined geographical area, the method comprising: receiving, by a processing circuitry of a computer system, travel mission data for at least one vehicle of a plurality of vehicles within the confined geographical area, the travel mission data comprising at least data about an intended route for completing a transport mission; obtaining, by the processing circuitry of the computer system, real-time road condition data for the intended route; based on the obtained real-time road condition data, determining, by the processing circuitry of the computer system, a drivability impact for the at least one vehicle intended to perform the travel mission along the intended route, the drivability impact being indicative of a decrease in any one of a vehicle traction control level and an energy efficiency level; in response to the determined drivability impact, adapting, by the processing circuitry of the computer system, any one of a driving mode and load capacity for the travel mission for the at least one vehicle; and controlling, by the processing circuitry of the computer system, the at least one based on any one of the adapted driving mode and load capacity for the travel mission.

The third aspect of the disclosure may seek to solve the same problem(s) as described for the first to second aspects of the disclosure. Thus, effects and features of the third aspect of the disclosure are largely analogous to those described above in connection with the first and second aspects of the disclosure.

According to a fourth aspect of the disclosure, there is provided a computer program product comprising program code for performing, when executed by the processing circuitry comprised in the computer system of the first aspect, the method of the third aspect.

According to a fifth aspect of the disclosure, there is provided a non-transitory computer-readable storage medium comprising instructions, which when executed by the processing circuitry of the first aspect, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits and/or technical improvements.

## BRIEF DESCRIPTION OF THE DRAWINGS

Examples are described in more detail below with reference to the appended drawings.

**FIGS. 1A - 1C** illustrate exemplary views of vehicles and vehicle powertrain systems, comprising a computer system having a processing circuitry configured to control traction force and brake force distribution of the vehicle according to an example.

**FIG. 2** illustrates an overview of a confined geographical area with a number of autonomous vehicles, according to examples.

**FIG. 3** illustrates an example of controlling traction force and brake force distribution of a vehicle, such as one of the vehicles of FIGS. 1A - 1C, along a pathway (intended route) in the confined geographical area of FIG. 2, according to the examples.

**FIG. 4** is a flow chart of an exemplary method to control a vehicle according to an example.

**FIG. 5** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The present disclosure is at least partly based on the realization that deploying and controlling electric vehicles, such as autonomous electric vehicles, in a confined geographical area may still be challenging in terms of providing an efficient and reliable operation of the vehicle, while at least maintaining sustainable vehicle performance in terms of stability and wear on various vehicle components. By way of example, autonomous heavy-duty vehicles, including trucks and haulers, operating in environments such as mines and quarries, may often encounter operational complexities when driving through muddy conditions. Navigating through mud typically increases energy consumption due to the vehicles needing to exert extra force to move, akin to plowing through the terrain. Such conditions elevate energy use and introduce considerations for operational efficiency and vehicle reliability.

Muddy terrain presents several challenges for autonomous heavy-duty vehicles, primarily because of its unpredictable and unstable nature. More specifically, muddy terrains may demand adaptability from autonomous vehicles to navigate inclines and declines seamlessly. Ensuring optimal performance across diverse terrain types while maintaining operational efficiency may thus present one challenge. Moreover, the continuous traversal of autonomous vehicles in confined areas with muddy terrain may generally also increase the risk of accelerated wear and tear on the vehicles. The challenges may be particularly pertinent in applications such as mining, quarries, or construction sites where operational spaces are constrained, and the terrain is inherently rugged.

For these and other reasons, there is still a need for improving the operations of autonomous vehicles in confined geographical areas, such as areas with muddy terrains.

To remedy this, the present disclosure provides a computer system, a vehicle including the computer system, and methods for controlling at least one of the vehicles in a confined geographical area.

Thus, the disclosure seeks to better manage the inefficiencies and challenges associated with vehicle operations in varying and unpredictable environments. By determining the drivability impact, indicative of an estimated decrease in traction control and/or energy efficiency, and considering external factors such as road conditions and mission requirements, the computer system enables real-time adjustments to the vehicle settings. Such configuration of the computer system may not only respond to the current operational states but may typically also consider future conditions, thereby enabling fine-tuning of the performance of the vehicle(s) across a range of situations. By processing travel mission data and real-time road condition, and then adjusting driving modes and load capacities, the disclosed computer system provides for controlling at least one vehicle based on the adapted driving mode and/or load capacity for the travel mission. In this manner, it becomes possible to control the vehicle in a more favorable manner, which may not only have a positive impact on the operations of the vehicle, but also on the wear of the vehicle as well as on the wear of the roads within the confined geographical area.

A technical benefit may include the management of energy consumption through the adjustment of drivability factors such as traction control levels and load capacity, contributing to improved vehicle efficiency and reduced operational costs. Furthermore, the adjustment of driving modes and the distribution of traction force according to real-time and anticipated road conditions aim to enhance vehicle productivity by ensuring smoother, faster, and safer completion of transport missions. Additionally, by moderating the strain on vehicle components through adjusted operation parameters, the proposed computer system contributes to reduce wear and tear, thereby extending the service life of the vehicle and decreasing the frequency of maintenance and repair.

To this end, the proposed computer system allows for improving the control of one or more autonomous electric vehicles in a confined geographical area containing a variable topography.

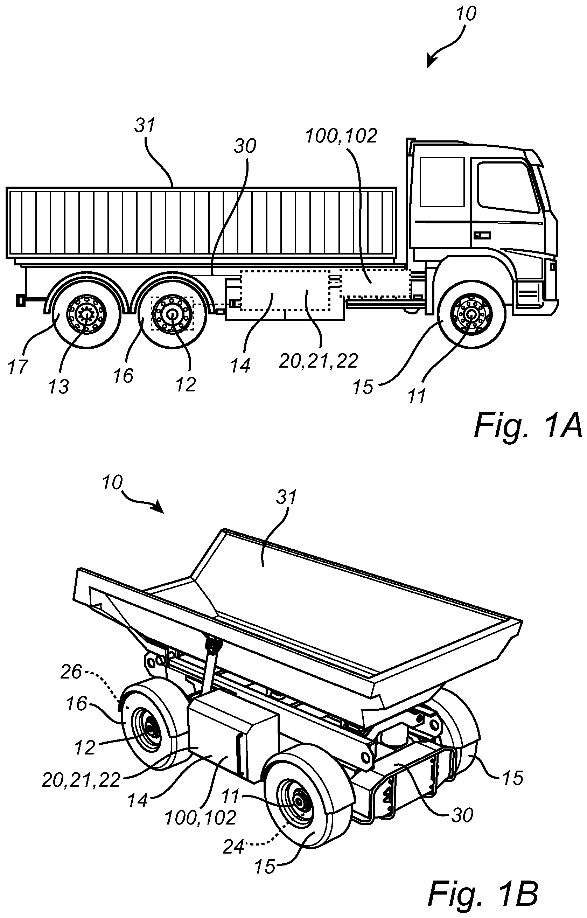

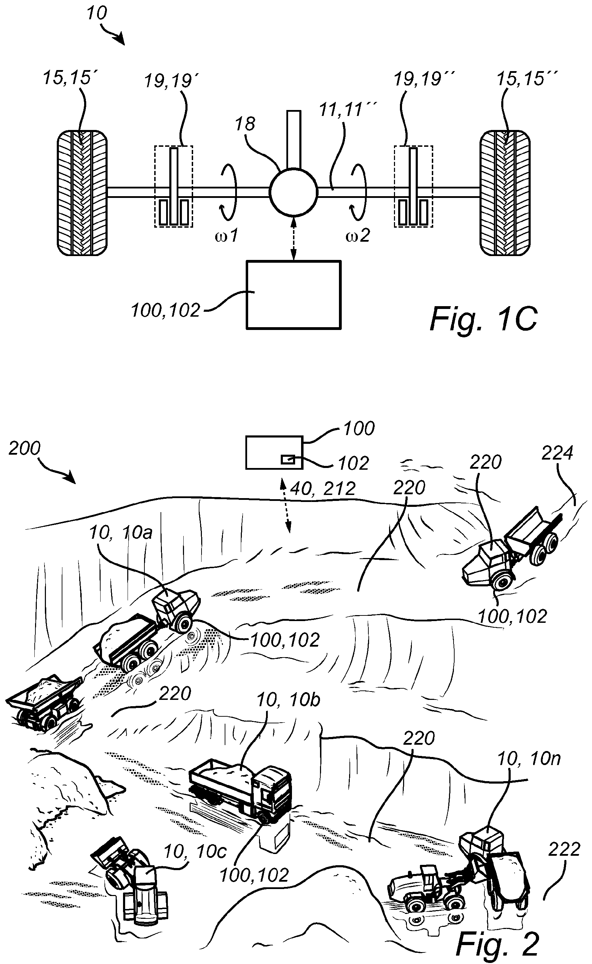

Examples of such computer systems and vehicles will now be described in relation to FIGS. 1A to 1C, in combination with FIGS. 2 to 5.

In FIG. 1A, there is illustrated one example of a vehicle 10. The vehicle 10 is here a heavy-duty vehicle, such as a truck. While the vehicle 10 in FIG. 1A is illustrated as a truck, the vehicle 10 may be of any type of vehicle suitable for transporting people and/or goods, such as bulk material from one location to another. For example, the vehicle may be an excavator, loader, articulated hauler, dump truck, truck or any other suitable vehicle known in the art. In some examples, the vehicle 10 may be driven by an operator. In other examples, the vehicle 10 may be an autonomous vehicle that is controlled by a vehicle motion management (VMM) unit configured to individually control vehicle units and/or vehicle axles and/or wheels of the vehicle.

In FIG. 1A, the vehicle 10 is also an electric vehicle. Accordingly, the vehicle 10 is an autonomous electric vehicle. The vehicle 10 comprises a powertrain system 14. The powertrain system 14 comprises a propulsion unit 20. The propulsion unit may be provided by one or more electrical machines. In other types of arrangement, the propulsion unit 20 may include a traction-supporting internal combustion engine. The propulsion unit is 20 typically an energy converting unit configured to provide a torque. In this example, the propulsion unit 20 is an electric machine.

The electric machine 20 is further powered by a battery system and/or a fuel cell system. Hence, the powertrain system 14 here also comprises any one of a battery system 21 and a fuel cell system 22. In other words, the powertrain system 14 is an electric powertrain system and the vehicle 10 is a fully electrical vehicle. However, in some examples, the vehicle 10 may also include a supporting internal combustion.

Accordingly, the powertrain system 14 in FIG. 1A comprises at least one propulsion unit in the form of one or more electric machines 20, the battery system 21 and the fuel cell system 22.

The powertrain system 14 is configured to provide traction power for the vehicle 10. The traction power is delivered to one or more ground engaging members 15, 16, 17, e.g. one or more wheels of the vehicle 10. By way of examples, the traction power is delivered to the wheels, such as the wheels 15 by any one of the battery system 21 and the fuel cell system 22 in cooperation with one or more electric machines 20.

Electric machines 20 are responsible for converting electrical energy from the battery system 21 or fuel cell system 22 into mechanical power to drive the vehicle's wheels. The electric machine 20 is thus configured to provide traction power to the vehicle 10. The electric machine 20 is configured to be connected to the battery system 21 and the fuel cell system 22. It should be noted that the powertrain system 14 may be provided with a plurality of electric machines 20.

The powertrain system 14 may further comprise additional components as is readily known in the field of electrical propulsions systems, such as a transmission for transmitting a rotational movement from the electric machine(s) to a propulsion shaft, sometimes denoted as the drive shaft (not shown). The propulsion shaft connects the transmission to the wheels. Some vehicles may use a traditional multi-speed transmission, while others employ single-speed transmissions or direct-drive configurations for simplicity and efficiency. Furthermore, although not shown, the electrical machine 20 is typically coupled to the transmission by a clutch. The electric machine 20 is arranged to receive electric power from any one of the battery system and the fuel cell system. The electric machine 20 is here also arranged specifically as a traction electric machine for the vehicle. The traction electric machine is configured to provide traction power to the vehicle 10.

Moreover, as illustrated in FIG. 1A, the vehicle 10 comprises a chassis 30 and a load carrying container 31 connected to the chassis 30. The chassis 30 is configured to support the load carrying container 31. The load carrying container 31 is configured to carry materials, such as mining shovel or the like.

As depicted in FIG. 1A, the vehicle 10 is supported by wheels 15, 16, 17, where each wheel comprises a tire. The vehicle 10 comprises multiple axles, including a front axle 11 and a number of rear axles 12, 13. The front axle 11 is here considered as a first wheel axle. Moreover, one of the rear axles, such as the rear axle 12, is considered as the second wheel axle. The tractor unit has front wheels 15 which are normally steered, and rear wheels 16, 17 of which at least one pair are driven wheels. Any one of the front axle 11 and the rear axles 12, 13 may be configured to be driven by the powertrain system 14. In some examples, only the front axle 11 is driven by the powertrain system 14. In other examples, only one of the rear axles, such as the rear axle 12, is driven by the powertrain system 14. In yet other examples, all axles 11, 12, 13 are driven by the powertrain system 14.

Typically, the rear wheels of the vehicle 10 may be mounted on tag or pusher axles. A tag axle is where the rear-most drive axle is non-powered, also referred to as a free-rolling or dead axle. A pusher axle is where the forward-most drive axle is not powered.

More specifically, the vehicle 10 of FIG. 1A comprises the front axle 11. The front axle 11 is provided with the pair of wheels 15. Also, the vehicle 10 of FIG. 1A comprises two rear axles 12, 13. Each one of the rear axles 12, 13 are provided with corresponding set of pair of wheels, 16, 17, respectively.

FIG. 1B schematically illustrates another example of an autonomous electric vehicle 10. The vehicle 10 of FIG. 1B is a load carrying vehicle in the form of a hauler. The load carrying vehicle 10 comprises the chassis 30, the load carrying container 31 connected to the chassis 30, and a plurality of wheels 15, 16. The vehicle 10 of FIG. 1B further comprises the front axle 11. The front axle 11 is provided with the pair of wheels 15. Moreover, the vehicle 10 of FIG. 1B comprises the rear axle 12. The rear axle 12 is provided with the corresponding set of pair of wheels 16. The vehicle 10 of FIG. 1B is also an example of an autonomous electric vehicle comprising front wheel and rear wheel steering. Hence, the vehicle 10 here comprises a front wheel steering device 24 and a rear wheel steering device 26. Each one of the front wheel steering device 24 and the rear wheel steering device 26 is configured to control steering of the respective axle and its corresponding wheels. Each one of the front wheel steering device 24 and the rear wheel steering device 26 is connected to the computer system 100. Hence, the computer system 100 is configured to control steering of the front axle 11 and the rear axle 12. The steering of the front axle 11 and the rear axle 12 can be performed either individually, or in combination. As such, the computer system 100 is configured to control steering of the front axle 11 and the rear axle 12 by means of the front wheel steering device 24 and the rear wheel steering device 26, respectively.

FIG. 1C schematically illustrates more details of an axle of the vehicle 10 in FIG. 1A and/or 1B. In FIG. 1C, the axle is the front axle 11. The axle in FIG. 1C may likewise be a rear axle, such as the rear axle 12.

In FIG. 1C, the front axle 11 is connected to the wheels 15, 15', 15". The front axle 11 comprises a first axle part 11' connected to the left wheel 15a and a second axle part 11" connected to the right wheel 15". As illustrated in FIG. 1C, the vehicle 10 here also comprises a differential lock 18. Hence, the powertrain system 14 also comprises the differential lock 18. The differential lock 18 is configured to control distribution of traction from the electric machine 20 to the wheels 15, 15', 15" by mechanically linking the two drive wheels 15, 15', 15" to the axle 11, 11', 11". In a typical open or standard differential, each wheel on an axle part can rotate independently, which is beneficial for smooth turns. However, in certain off-road or low-traction situations, such as mud, snow, or uneven terrain, one wheel may lose traction while the other spins freely. In such cases, a differential lock can be engaged to force both wheels on the same axle to turn at the same speed, improving traction and preventing wheel spin. These parts of the powertrain system 14 are conventional parts in a powertrain system, and thus not further described herein.

Moreover, as illustrated in FIG. 1C, the vehicle 10, here the axle 11, comprises one or more brakes, which are provided e.g. in the form of one or more service brakes 19, 19' 19". The first (left) and second (right) driven wheels 15, 15', 15" may be arranged to be braked by respective first and second service brakes 19, 19', 19".

Each one of the service brakes may, e.g., be a pneumatically actuated disc brake or drum brake. The wheel service brakes are controlled by corresponding brake controllers (not illustrated). Each one of the wheel brake controllers is here communicatively coupled to the computer system 100, allowing the computer system 100 to communicate with the brake controllers, and thereby control vehicle braking. These parts of the powertrain system 14 are conventional parts in an electric powertrain system, and thus not further described herein.

The computer system 100 may also be configured to control the transfer of torque from the electric machine 20, i.e. from the powertrain system 14, to the wheels, such as the front wheels 15. The computer system 100 may also be configured to control the transfer of torque from the electric machine 20, i.e. from the powertrain system 14, to a plurality of set of wheels, such as the front wheels 15 and the rear wheels 16. By way of example, the computer system 100 is configured to feed torque transfer command to the electric machine 20 to transfer torque to the wheels 15, 16 via the driven axles of the vehicle 10.

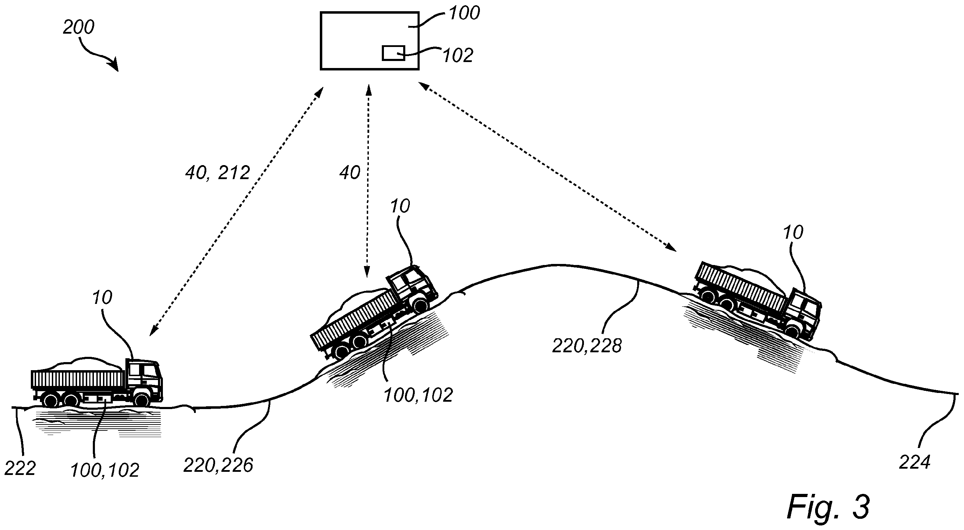

The autonomous vehicle 10 of any one of FIGS. 1A to 1C may be configured to autonomously navigate along a vehicle pathway 220 in the form of a route comprising a set of route segments, as illustrated in e.g. FIGS. 2 and 3. To navigate each respective route segment out of the set of route segments, the autonomous vehicle 10 needs to know its location with respect to the route. To locate the autonomous vehicle 10 with respect to the route 220, a localization service may be used. To this end, the autonomous vehicle 10 is here arranged with a set of sensors (not illustrated). Any sensor in the set of sensors may be mounted at any suitable location of the autonomous vehicle 10. For example, the set of sensors may comprise at least one 2D Lidar sensor, at least one 3D Lidar sensor, at least one camera unit, at least one wireless device for network positioning, or any other suitable sensor. In some examples, the at least one 2D Lidar sensor may be arranged on multiple or all sides of the autonomous vehicle 10, e.g. such that the at least one 2D Lidar sensor is capable of scanning all surroundings of the autonomous vehicle 10. The at least one 3D Lidar sensor may be arranged on the roof of the autonomous vehicle 10 to be able to scan 360 degrees around the autonomous vehicle 10. The at least one wireless device may comprise any suitable wireless device which can communicate with any number of suitable network entities in a wireless network. Based on a signal from the wireless device, the network entities may be able to triangulate the position of the wireless device, and thereby also locate the autonomous vehicle 10, and report the location back to the wireless device. Any other suitable methodology for locating the autonomous vehicle 10 with the use of the wireless network may also apply. For example, this may be any suitable telecommunications positioning methodology, e.g. by using ultra-wide band positioning and triangulation. The at least one camera unit may comprise one or more different types of camera units arranged in one or more places of the autonomous vehicle 10. The at least one camera unit may comprise a Red, Green, Blue and Depth (RGBD) sensor camera unit which can record the surroundings and account for depth. The at least one camera unit may additionally, or alternatively, comprise any one of one or more infrared cameras, heat cameras, stereo cameras. Furthermore, the set of sensors may comprise any suitable sensor device for communicating with a Global Navigation Satellite System (GNSS) for finding the location of the autonomous vehicle 10 based on communication with satellites. The GNSS may for example be GPS or any other alternatives, e.g. BeiDou, Galileo, GLONASS, or any other suitable satellite positioning system. Other navigation systems are also conceivable as used within autonomous vehicles.

Turning now to FIG. 2, there is illustrated a number of autonomous vehicles 10 operating within a confined geographical area 200. In the following description of FIG. 2, the autonomous vehicles 10 will simply be denoted as vehicles for ease of reference. In FIG. 2, the confined geographical area 200 corresponds to a quarry area. The quarry area is here a muddy area. The confined geographical area 200 can be defined in several different manners, as is commonly known in the art.

By way of example, defining the confined geographical area 200 for autonomous vehicles 10 here involves specifying the boundaries and parameters within which these vehicles are authorized to operate. The definition of the confined geographical area 200 often includes considerations for geographic limits and operational boundaries for the vehicle 10. More specifically, the confined geographical area for autonomous vehicles 10 is defined by any one of geographic coordinates, which specifies the geographical coordinates (latitude and longitude) that define the boundaries of the area, physical landmarks, which identifies physical landmarks or boundaries that set the edges of the confined area, and digital mapping, which utilizes digital mapping technologies to create a virtual boundary for the confined area. GPS-based mapping systems can e.g. be employed to create a geofence, a virtual perimeter that the autonomous vehicles should not cross. GPS or RFID (Radio-Frequency Identification) may also be used to further create a virtual boundary. The definition of the confined geographical area 200 may also be based on operational boundaries, which specify operational constraints within the confined area. The operational constraints may include speed limits, specific routes, or areas where certain vehicle behaviors are restricted or encouraged. The definition of the confined geographical area 200 may also be based on environmental conditions (e.g. weather conditions, lighting, or specific road surfaces). The definition of the confined geographical area 200 may also be based on legal and regulatory framework and various safety measures. Also, in order to allow for communication between the vehicles, the confined geographical area 200 may generally include a communication protocols so as to establish communication protocols between the autonomous vehicles and a central control system or infrastructure within the confined area. In this manner the vehicles 10 can be monitored in real-time and further coordinated in relation to each other.

The vehicles 10 are controlled in an autonomous manner so as to carry out several different transportation missions within the quarry area. The vehicles 10 are operating along one or more vehicle pathways 220, as illustrated in FIG. 2. The vehicles 10 may not only transport material from a first starting position (location) 222, such as a loading zone, to a second destination position (location) 224, such as an unloading zone, but also perform one or more quarrying operations, including e.g. removal of material from the earth's surface. The materials may e.g. be rock, sand, gravel, limestone, or other minerals.

The vehicle pathway 220 is here typically defined by the road, including one or more road segments. The vehicle pathway 220 also corresponds to the intended route for the transport (transport mission). In other words, the computer system 100 receives transport mission characteristics about the upcoming transport mission, which includes route data about the intended route. The intended route for the vehicle 10 thus refers to the pathway of the vehicle 10 for performing the transport mission. The vehicle pathway 220 thus refers to the specific trajectory or course that the vehicle 10 is planned to take to perform the transport mission. The vehicle pathway 220 typically encompasses the physical route traveled by a vehicle 10. The route, or intended route, typically refers to a predetermined course for the vehicle 10 to operate from one place to another, e.g. from 220 to 224 along the vehicle pathway 220. The route can include a series of directions or instructions indicating the specific roads or paths to take along the vehicle pathway to reach the destination.

Occasionally, the vehicles 10 may be subject to road conditions resulting in traction loss due to different friction between the wheels 15, 16, 17 of the vehicle 10 and the road. Such road conditions may occur e.g. during rainy periods and/or at colder periods when the road surface is muddy or covered with snow or ice. In particular, muddy, and hilly terrains within the confined geographical area 200 introduce additional complexities in navigation, requiring the vehicles 10 to adapt to varying inclines and declines while maintaining operational performance.

To this end, the vehicles 10 may be subjected to unpredictable road conditions and surfaces that can have a detrimental effect on the contact between the tires and the road. Such road conditions and road surface may occasionally result in wheel slip of the vehicle 10, which is even more evident in operating situations in muddy terrains when needed torque is high, such as climbing an uphill muddy road segment. Excessive wheel slip occurs when too much torque is applied to an axle, or a wheel, compared to the road friction. Excessive wheel slip is undesired since it results in an unpredictable vehicle behavior and also in energy inefficient operation.

As will be described hereinafter, the computer system 100 is configured to control at least one vehicle, such as the vehicle 10a, of a plurality of vehicles 10a to 10n based on any one of an adapted driving mode and adapted load capacity of the vehicle 10a. It should be appreciated that the computer system 100 may likewise be configured to control the other vehicles in a similar fashion. For ease of reference, an example of the disclosure is described in relation to a control of one vehicle 10, such as the vehicle 10a.

The computer system 100 is here an integral part of the vehicle 10. It should be noted that the computer system 100 may be an integral part of the powertrain system 14. In other examples, the computer system 100 and the powertrain system 14 may be separate parts of the vehicle that are configured to communicate with each other. In addition, or alternatively, the computer system 100 may e.g. be a part of a remote server, such as the central control system, or the like, as illustrated in e.g. FIG. 2 and FIG. 3, while further being configured to be in communication with one or more corresponding sub-computer systems 100' of the vehicles 10. Hence, in some examples, there is provided a computer system 100 comprising a central control system and a number of vehicles 10, each one of the vehicles having a sub-computer system 100', and wherein the central control system 100 is configured to be in communication with the sub-computer systems 100' of the vehicles 10 so as to control the vehicle 10 based on any one of the adapted driving mode and adapted load capacity for the travel mission.

As further illustrated, the computer system 100 comprises processing circuitry 102. The processing circuitry 102 is configured to control the vehicle 10, as described herein.

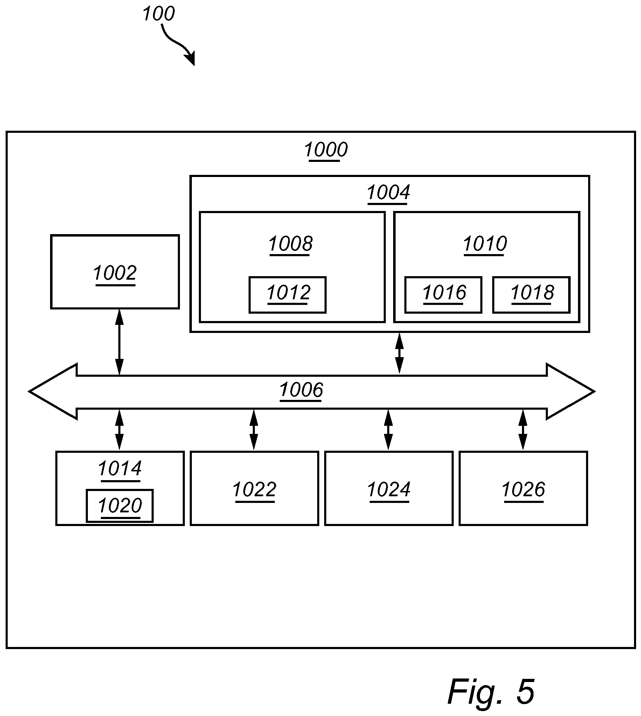

The computer system 100 may also comprise a memory and a system bus (although not illustrated). These components and further optional technical details of the computer system 100 are described in relation to FIG. 5.

The processing circuitry 102 is configured to receive travel mission data for the vehicle 10a. In this example, the processing circuitry 102 also receives travel mission data for the other vehicles 10 within the confined geographical area 200. As such, the computer system 100 receives travel mission data for at least one vehicle 10a of a plurality of vehicles 10, but typically for all vehicles 10a to 10n within the confined geographical area 200. The travel mission data 212 comprises data about an intended route 220 for completing a transport mission, such as travel mission data for the vehicle 10a for completing its transport mission along the route. To this end, the processing circuitry 102 obtains transport mission characteristics for an upcoming transport mission for the vehicle 10a.

The travel mission data 212 can be varied for different types of vehicles 10. By way of example, the travel mission data 212 contains data indicative of a requested transport mission to transport materials and/or goods from a first point 222 (position / location) to a second point 224 (position / location) along a planned route. The route between the first point 222 and the second point 224 here corresponds to the vehicle pathway 220, see e.g. FIG. 2. In other words, the transport should be performed by the vehicle 10a from the geographical starting point (first position) 222 to a geographical destination (second position) 224. The transport is performed along the route, including one or more roads. Hence, the vehicle pathway 220 is here the road. Other examples are also possible, such as a transportation of people. The transportation may also include an iterative transportation of materials along a certain route. The processing circuitry 102 is typically configured to determine transport mission characteristics for the upcoming transport mission for the vehicle 10 based on the received transport mission data 212.

The travel mission data 212 can be provided in several different manners to the processing circuitry 102. In addition, the travel mission data 212 may contain several different types of data. By way of example, the travel mission data 212 for the upcoming transport mission for the vehicle 10 comprises transport mission data 212 indicative of at least the destination location 224 and a destination time. The destination time refers to a point in time for the vehicle 10a to arrive at the destination point 224.

In an extended example, the travel mission data 212 further contains transport mission duration data, distance to be traveled and similar transport mission data. The transport mission data 212 may also contain a speed restriction profile for the transport mission, a minimum speed profile for the transport mission, desired or required speed for different segments of the transport mission (e.g., city driving, highway cruising, acceleration, deceleration).

Moreover, the processing circuitry 102 is configured to obtain real-time road condition data for the intended route 220. From the real-time road condition data, the processing circuitry 102 determines one or more vehicle pathway characteristic for the upcoming transport mission based on topology data of an intended route (such as the route / vehicle pathway 220) for the transport mission.

The vehicle pathway characteristic can be provided in several different manners to the processing circuitry 102. In addition, the vehicle pathway characteristic may contain several different types of data. By way of example, the vehicle pathway characteristic is obtained from data of a topology map over the confined geographical area 200. The topology data / topology map can be obtained from a drone scan 3D map and/or from an ongoing recording by one or more vehicles driving along the vehicle pathway 220.

In addition, or alternatively, the processing circuitry 102 is configured to obtain topology data from a number of data sources, such as digital maps, GPS data, or geographic information system (GIS) databases. These sources may generally include relevant information about the road network, including roads, elevation data, inclination data, and potential destinations. In one example, the topology data is received by the processing circuitry 102 from a route planner system of the computer system 100 and/or the vehicle 10. In other examples, the topology data is obtained from previous transport missions along the planned route.

Moreover, the vehicle pathway characteristic here comprises data indicative of at least a road inclination. For example, the vehicle pathway characteristic comprises data indicative of a road inclination associated with the vehicle pathway 220 and the intended route for the vehicle 10 to complete the transport mission.

In addition, or alternatively, the topology data of the intended route for the transport mission may comprise relevant data for determining the route profile of the vehicle pathway 220, including elevation changes, inclination and inclination changes, road grade, and terrain type (urban, highway, off-road, etc.).

The vehicle pathway characteristic may further include traffic conditions, such as traffic congestion and stop-and-go driving conditions, which affect energy consumption and power demand.

In addition, or alternatively, the vehicle pathway characteristics may comprise a speed profile for the vehicle for performing the transport mission along the intended route.

In one extended example, the processing circuitry 102 obtains real-time road condition data for the intended route 220 from any one of the other vehicles 10b to 10n. In other examples, the processing circuitry 102 obtains real-time road condition data for the intended route 220 from the central control server, which is arranged in communication with the processing circuitry 102 via a wireless network 40. Thus, the processing circuitry 102 is typically also configured to obtain real-time road condition data for the intended route 220 from any one of the vehicles intended to perform the travel mission and a central control server in communication with the processing circuitry 102.

Further, the processing circuitry 102 is configured to determine a drivability impact for the vehicle 10a based on the obtained real-time road condition data. As such, the processing circuitry 102 determines the drivability impact for the vehicle 10a intended to perform the travel mission along the intended route 220. The drivability impact is indicative of an estimated decrease in any one of a vehicle traction control level and an energy efficiency level. In this example, the drivability impact is indicative of the estimated decrease in the vehicle traction control level and the estimated decrease in energy efficiency level. In other examples, the drivability impact is only indicative of the estimated decrease the vehicle traction control level. In other examples, the drivability impact is only indicative of the estimated decrease in energy efficiency level.

In one example, in which the drivability impact is indicative of an estimated decrease in vehicle traction control level, the decrease in vehicle traction control level is any one of an increase in wheel slip and a decrease in a ratio between torque requirement and acceleration on the traction electric machine.

Typically, the decrease in vehicle traction control level involves both an increase in wheel slip and a decrease in a ratio between torque requirement and acceleration on the traction electric machine. In this context, the increase in wheel slip and the decrease in the ratio between torque requirement and acceleration on the traction electric machine can be considered as complement to each other. Such consideration is based on the assumption that under slippery conditions, the transfer of motor torque to the drivetrain may not effectively result in corresponding vehicle acceleration or deceleration. The above configuration may thus be useful in situations where direct measurement of axle or wheel speeds is not feasible or available. Under such circumstances, the system may instead rely on alternative methods to assess whether the applied torque is resulting in actual vehicle motion or merely contributing to wheel slip.

In an example where the estimated decrease in vehicle traction control level amounts to the estimated increase in wheel slip, the drivability impact refers e.g. to an estimated substantial increase in wheel slip in comparison with a wheel slip reference level associated with normal road conditions. The wheel slip will affect drivability of the vehicle; hence a predicted wheel slip is considered as a reliable measure for estimating the drivability of the vehicle. As such, the drivability impact is determined by comparing predicted wheel slip based on road conditions with expected estimated wheel slip during normal conditions.

In the context of the disclosure, energy efficiency levels and traction forces associated for normal road conditions can be derivable from predetermined stored data and values, from a look-up table, and/or from previous estimated energy efficiency levels and traction forces for operating on normal road conditions.

As such, the energy efficiency for normal road conditions typically amounts to average energy consumption for a vehicle per driven distance for different loads over previous days/periods. The computer system 100 may also store weather data etc., which can serve as additional input. Other examples are also conceivable, as is commonly known in the art. Traction forces associated for normal road conditions can be derivable from stored wheel slip data.

Stored wheel slip data can be either estimated based on wheel speed vs. traveling speed (determined from e.g. GNSS and/or lidar data), or by checking traction force vs. acceleration on the vehicle. Another example of deriving wheel slip data could be to use lidar to estimate the road roughness and use the estimated road roughness as an indicator. For example, the processing circuitry 102 calculates a roughness index from the lidar data. This index classifies road sections on a scale from smooth to extremely rough. The processing circuitry 102 then correlates higher roughness indices with an increased risk of wheel slip. Such correlations can be made based on historical data and data that associates certain roughness measurements with slip occurrences.

The ratio between torque requirement and acceleration of the traction electric machine is e.g. determined based on topology data, including determining at least one vehicle pathway characteristic, the total weight of the vehicle (including load), and further determining a speed profile for performing the transport mission. The decrease in the vehicle traction control level can be determined based on an estimation of an absolute value of the vehicle traction control level. An absolute value in this context refers to a quantifiable measure or index of traction control effectiveness at a given time. This could include metrics like the degree of wheel slip, torque applied to the wheels versus actual wheel rotation (which would indicate slipping and thus a loss of traction), or other sensor data that directly relates to how effectively a vehicle is maintaining grip on the road surface. For example, the processing circuitry 102 can be configured to continuously monitor various parameters like wheel torque, wheel speed and other parameters. These parameters are used to compute a current traction control level. In other examples, the decrease in the vehicle traction control level is determined based on a comparison with a nominal value associated with normal driving conditions.

In one example, in which the drivability impact is indicative of the decrease in the energy efficiency level, the drivability impact is determined from energy consumption data for performing the transport mission. As such, the drivability impact is here an estimated measure or parameter of a substantial deviation in energy efficiency in comparison with an energy efficiency reference level associated with operating the vehicle on normal road surface conditions. As such, the drivability impact is determined by comparing predicted energy efficiency of the vehicle 10a for performing the transport mission along the vehicle pathway (with the prevailing road surface conditions) with expected estimated energy efficiency of the vehicle 10a during normal road surface conditions.

The decrease in the energy efficiency level can be determined based on an estimation of an absolute value of the energy efficiency level. In other examples, the decrease in the energy efficiency level is determined based on a comparison with a nominal value associated with normal driving conditions.

As such, the processing circuitry 102 is configured to determine the decrease in any one of the vehicle traction control level and the energy efficiency level based on an estimation of an absolute value of any one of the vehicle traction control level and the energy efficiency level, respectively. In other examples, the processing circuitry 102 is configured to determine the decrease in any one of the vehicle traction control level and the energy efficiency level based on a comparison with a nominal value associated with normal driving conditions.

Moreover, in response to the determined drivability impact, the processing circuitry 102 adapts any one of the driving mode and the load capacity for the travel mission for the vehicle 10a. As such, the processing circuitry 102 is configured to adapt any one of the driving mode and the load capacity for the travel mission for the vehicle 10a based on the determined drivability impact.

In addition, based on any one of the adapted driving mode and adapted load capacity for the travel mission, the processing circuitry 102 controls the vehicle 10a along the route when performing its travel mission, such as the transportation of material in the illustrated geographical area of FIG. 2. As such, the processing circuitry 102 is configured to control the vehicle 10a based on any one of the adapted driving mode and adapted load capacity for performing and completing the travel mission.

By way of example, the processing circuitry 102 adapts the driving mode by adapting a traction force distribution between the front axle 11 and the rear axle 12. Hence, the processing circuitry 102 is configured to adapt the driving mode by adapting a traction force distribution between the front axle 11 and the rear axle 12.

Adapting the driving mode by adapting a traction force distribution between the front axle 11 and the rear axle 12 is here controlled by controlling the transfer of traction force to the wheels of the front axle 11 and the rear axle 12. The traction force is provided by the propulsion unit, such as the electric machine 20. In some examples, each one of the axles, such as the front axle 11 and the rear axle 12 are powered a by a separate electric machine. That is, the vehicle 10 comprises a plurality of electric machines 20. In such example, the traction force distribution between the front axle 11 and the rear axle 12 is controlled by controlling the transfer of traction force to the wheels of the front axle 11 and the rear axle 12 by controlling each one of the electric machines.

It should also be noted that the computer system 100 may be configured to adapt the traction force distribution between another set of axles among the axles of the vehicle 10, e.g. between the rear axles 12, 13.

Moreover, in this example, the processing circuitry 102 adapts the traction force distribution between the front axle 11 and rear axle 12 by controlling the differential lock device 18.

In other examples, the processing circuitry 102 adapts the driving mode by adapting a maximum steering angle of the steering device(s) 24, 26 of one or more wheels. As such, the processing circuitry 102 is configured to adapt the driving mode by adapting a maximum steering angle of the steering device(s). This operation typically includes controlling one or more of the front and rear steering devices 24, 26 based on the determined steering mode. In the example where the vehicle 10 comprises the front wheel steering device 24 and the rear wheel steering device 26, the processing circuitry 102 is configured to adapt the driving mode by a setting a given steering mode for any one of the front wheel steering device 24 and the rear wheel steering device 26.

By way of example, the processing circuitry 102 is configured to adapt the load capacity by reducing a maximum allowable load level. By way of example, the load capacity is determined from a gross combined weight (GCW) of the vehicle 10a. In addition, or alternatively, the load capacity is determined from the GCW and from a determined distribution of a payload on the vehicle 10a. Adapting the load capacity of the vehicle 10a may also include estimating the maximum allowable load level, e.g. in the form of discrete levels, such as fully loaded, half loaded, or no load. The estimation is then sent to the vehicle 10a, or another vehicle 10 intended to load the vehicle 10a (such as the wheel loader), where the maximum allowable load level is visualized in a tablet or the like. In other examples, it would also be possible to not let the vehicle 10a leave the loading spot if excessive load is loaded on the vehicle 10a.

In one extended example, the processing circuitry 102 is also configured to determine a drivability impact for at least one additional vehicle 10 among the plurality of vehicles 10, 10a to 10n, such as the vehicle 10b in FIG. 2. The drivability impact for the additional vehicle 10b is determined in a similar way as for the vehicle 10a. Hence, the drivability impact for the additional vehicle 10b is determined based on the obtained real-time road condition data. In response to the determined drivability impact for the additional vehicle 10b, the processing circuitry 102 here also adapts the driving mode and the load capacity for the travel mission for the additional vehicle 10b, and control the vehicles 10a, 10b in accordance with adapted driving mode and adapted load capacity for the travel mission for the vehicles 10a, 10b, respectively.

It should be noted that in some examples, the processing circuitry 102 is configured to determine corresponding drivability impacts for all vehicles 10a to 10n within the confined geographical area 200. In such configuration, the drivability impacts for all vehicles 10a to 10n are typically determined by a processing circuitry 102 of a central server, which can e.g. be the computer system 100, as mentioned above. Alternatively, or in addition, the drivability impacts for the vehicles 10a to 10n are determined by corresponding processing circuitry 102 of each vehicle 10a to 10n. The drivability impacts are then communicated to the central server (the computer system 100). In such configurations, the processing circuitry 102 of the computer system 100 adapt the driving mode and/or the load capacity for several vehicles 10, such as all vehicles 10a to 10n, in response to the determined drivability impacts and the received travel mission. Moreover, in such configurations, the processing circuitry 102 of the computer system 100 controls the vehicle 10, 10a to 10η based on the respective adapted driving mode and adapted load capacity for the travel mission(s).

In one example, the plurality of vehicles 10, 10a to 10η comprises a first vehicle in the form of a plowing vehicle 10b and a second vehicle controlled to follow the first vehicle 10b. In this example, the second vehicle 10 is e.g. the vehicle 10a. Also, the processing circuitry 102 is here configured to control the first vehicle 10b according to a first route, which here corresponds to the route 220, so that the first vehicle 10b is controlled to establish a first track (not illustrated) along the road surface of the first route 220. For example, in muddy terrains, the first track will be established in a muddy road surface. In addition, the processing circuitry 102 is configured to control the second vehicle 10a so as to follow the first track of the first vehicle 10b. For example, the processing circuitry 102 is configured to control the second vehicle 10a based on obtained real-time road condition data for the intended route of the first vehicle 10b, so as to follow the first track of the first vehicle 10b. In addition, or alternatively, the processing circuitry 102 may be configured to control the second vehicle 10a based on obtained real-time positioning data of the first vehicle 10b, so as to follow the first track of the first vehicle 10b. In addition, or alternatively, the processing circuitry 102 may be configured to control the second vehicle 10a based on a combination of obtained real-time for the intended route of the first vehicle 10b and obtained real-time for the intended route of the second vehicle 10a, so as to follow the first track of the first vehicle 10b. In the above example, the plowing (first) vehicle 10b and the second vehicle are typically controlled to operate along the same intended route 220.

By way of example, a lateral offset of a track for the second vehicle 10a is adjusted based on the first track of the plowing (first) vehicle 10, which can be determined based on the real-time road condition data, real-time positioning data, etc., of the first vehicle 10b. As such, the lateral offset, which typically is a direction lateral to the driving direction of the vehicle and/or a direction lateral to the longitudinal direction of the route 220, is determined based on the first track of the plowing (first) vehicle 10b. In addition, or alternatively, a lateral offset of a track for the second vehicle 10a is adjusted in response to the obtained real-time road condition data for the first vehicle 10b. As such, the lateral offset of the track for the second vehicle 10a can be adjusted in response to any one of the first track of the first vehicle 10b and the obtained real-time road condition data for the first vehicle 10b.

The plowing first vehicle 10b may be of a different type than the second following vehicle 10a intended to drive the route 220. Alternatively, the plowing first vehicle 10b is of a similar type as the second following vehicle 10a intended to drive the route.

Moreover, as mentioned above, the processing circuitry 102 may also be configured determine the speed profile for the vehicle 10 for performing the transport mission along the intended route. The intended route is here a planned route based on the transport mission characteristics. The intended route thus corresponds to the vehicle pathway 220. The speed profile for the vehicle 10 for performing the transport mission along the intended route is determined on the basis on the determined transport mission characteristics and the determined at least one vehicle pathway characteristic.

The speed profile is a predicted vehicle speed for the vehicle 10 under the transport mission. The predicted vehicle speed is calculated in relation to the time for when the transport mission should be completed. Hence, the processing circuitry 102 is configured to receive data indicative of a desired vehicle speed for the vehicle 10 under the transport mission. The desired vehicle speed can e.g. be determined on the basis of the desired time for the duration of the transport mission. By way of example, the desired time is a desired time period for completing the transport mission. The desired time can also be a desired time for when the transport mission should be completed. In such example, the desired time period is the period between the start of the transport mission and the completion of the transport mission. The desired vehicle speed is then calculated based on this time period. Hence, the processing circuitry 102 is configured to calculate the desired time for when the transport mission should be completed and/or the desired time period for duration of the transport mission. Based on the desired time for when the transport mission should be completed and/or the desired time period for the duration of the transport mission, the processing circuitry 102 subsequently calculates the desired vehicle speed. The desired vehicle speed is then used as the predicted vehicle speed for the transport mission. It should be readily appreciated that the vehicle speed (both predicted and desired) may also be limited by the maximal vehicle speed, which in turn may depend on both the specifications of the vehicle, the topology, and the road. Accordingly, determining the desired or required speed for the vehicle 10 to perform the transport mission involves considering various factors that affect the journey, such as time constraints, distance, and road conditions. In other examples, the processing circuitry 102 is configured to estimate one or more speed profiles for the vehicle 10. The processing circuitry 102 may thus create realistic speed profiles for different segments of the journey, wherein both optimal and suboptimal situations are considered based on road conditions, traffic, and any speed limits.

In addition, or alternatively, the predicted vehicle speed (or desired vehicle speed) is received by the processing circuitry 102 directly from the route planner system. In other examples, the predicted vehicle speed (or desired vehicle speed) is obtained from previous transport missions along the planned route.

As mentioned herein, the processing circuitry 102 may also be configured to predict wheel slip, or a risk for wheel slip. The wheel slip is typically determined based on at least one pathway characteristic and the determined speed profile.

By way of example, the risk for wheel slip is predicted by determining a friction force between a road surface and the wheels of the front axle 11 and rear axle 12, respectively. The road surface refers to the road for the vehicle 10 when performing and completing the transport mission along the vehicle pathway 220 (intended route). More specifically, the risk for wheel slip is predicted by determining a friction force between a road surface and the wheels of the front axle 11 and the rear axle 12, respectively, based on the vehicle pathway characteristic and speed profile. The prediction of risk of wheel slip involves considering various forces acting on the vehicle 10. One force is the tire-road friction, and one example of an equation commonly used for predicting wheel slip is based on the comparison between the maximum longitudinal force and the available friction. By predicting the risk of wheel slip based on the maximum longitudinal force and friction, the processing circuitry 102 evaluates and predicts the driving conditions so as to determine a traction force value that is below the maximum longitudinal force. In other words, the processing circuitry 102 is configured to balance the traction force in relation to available driving conditions, which are determined from the transport mission, the vehicle pathway characteristics and the speed profile. The maximum longitudinal force ($F_{long\_max}$) that drives the vehicle 10 forward or resists backward motion is related to the tire-road friction by the following equation:

$$F_{long\_max} = \mu_{road} * F_{normal}$$

*Equation 1*

where

$F_{long\_max}$ is the maximum longitudinal force [N];
$\mu_{road}$ is the coefficient of friction between the tire and the road; and
$F_{normal}$ is the normal force (the force exerted by the road surface perpendicular to the tire) [N].

If the longitudinal force exceeds the available friction, the wheel may start to slip, and the slip ratio increases. It should be noted that the friction may typically vary along the vehicle pathway and also vary in view of other parameters. Hence, the above equation and assumption are simplified representations, and more advanced vehicle dynamics models may generally be used, which involve additional factors such as tire slip angle, tire characteristics, and vehicle dynamics parameters to provide a more accurate prediction of wheel slip. As mentioned herein, the vehicle weight (such as the GCW) and payload may also be taken into consideration when predicting the risk of wheel slip.

It should also be noted that a predicted wheel slip may essentially relate to a predicted speed difference between a wheel and the vehicle (zero slip means that the wheel and vehicle are covering ground at the same speed). Accordingly, there are several different ways to predict the risk of wheel slip for the vehicle 10.

For example, the risk for wheel slip may be predicted from data indicative of a previous predicted high level of wheel slip. Such data can e.g. be obtained from a vehicle that has operated along the route at a previous occasion. In addition, or alternatively, the risk for wheel slip may be predicted by comparing predicted and/or current vehicle speed with predicted/or current wheel rotational speed. The vehicle speed and the wheel rotational speed may be obtained from the vehicle pathway characteristics.

In one example, the data used by the processing circuitry 102 so as to predict the risk for wheel slip (i.e. based on the determined vehicle pathway characteristic and the determined speed profile) is obtained from a map over the vehicle pathway 220 and the confined geographical area 200, which comprises data about potential wheel slip, the vehicle pathway characteristic, such as road conditions and road inclinations for the vehicle path. From this data, a risk of wheel slip can be predicted for the vehicle 10 along the intended route, corresponding to the vehicle pathway 220. This prepared map over the confined geographical area 200, which is indicative of predicted risk of wheel slip along the vehicle pathway 220 (intended route), are then used in combination with the determined speed profile for the vehicle (for performing the transport mission are) for generating the traction force and braking force distribution profile for the vehicle(s) 10.

The GCW of a truck here refers to the total weight of the entire combination of the truck, including possible use and weight of any trailer, including the cargo, passengers, and any other items carried. The GCW is a standard parameter and can be determined in several different ways, e.g. by weighing the truck, trailer and cargo, from a look-up table, from data received from a remote server or the like. The GCW may also be provided by the route planner system of the computer system 100. Hence, the GCW can likewise be determined from an on-board estimation by one or more weighing sensors and data indicative of the different loads on the vehicle 10. The computer system 100 may generally store the GCW in the memory in beforehand or receive data from a user, driver, operator or the like.

FIG. 3 illustrates an example of controlling a vehicle 10, such as one of the vehicles of FIGS. 1A - 1C, along a pathway 220 in the confined geographical area 200 of FIG. 2 according to the examples. FIG. 3 schematically illustrates an operating situation of a loaded truck 10 driving uphill and downhill, in which the computer system 100 can be used to control based on any one of the adapted driving mode and adapted load capacity for the travel mission. Initially, the processing circuitry 102 of the computer system 100 may obtain a real-time position of the vehicle 10, e.g. at the location 222 (starting position), at a location 226 (uphill road segment), at a location 228 (downhill road segment) and at, or near, the location 224 (destination).

Moreover, the processing circuitry 102 of the computer system 100 receives travel mission data for the vehicle 10. The travel mission data here comprises data about the intended route 220 for completing the transport mission 212. The travel mission data also contains mission instructions, such as transporting bulk materials from location 222 to location 224. In addition, the processing circuitry 102 of the computer system 100 obtains real-time road condition data for the intended route 220.

In response to the obtained real-time road condition data, the processing circuitry 102 determines the drivability impact for the vehicle 10 to perform the travel mission along the intended route 220. In this example, the drivability impact amount to an estimated decrease in vehicle traction control level and an estimated decrease in energy efficiency level due to a muddy uphill driving at location 226. Muddy terrain, uphill driving as well as muddy uphill driving are examples of vehicle path characteristics determined from topology data, weather data etc.

In response to the determined drivability impact, the processing circuitry 102 determines to adapt the driving mode and the load capacity for the travel mission for the vehicle 10 at the location 222, which is before approaching the uphill segment at location 226. Subsequently, the processing circuitry 102 controls the vehicle 10 along the vehicle pathway 220 (route) based on the adapted driving mode and adapted load capacity when performing the bulk material transport to the location 224 (i.e. the travel mission). By way of example, the processing circuitry 102 determines that the adapted driving mode is an adapted traction force distribution of 70% traction force on the front axle 11 and 30% traction force on the rear axle 12. In this context, the percentage value refers to the distribution of the traction force, provided by the propulsion unit, between the axles. Moreover, the processing circuitry 102 determines that the maximum allowable load capacity of the vehicle 10 cannot exceed 50 % of the maximum available load capacity of the vehicle 10. Hence, the adapted load capacity for the travel mission amounts to a half-filled vehicle 10.

As such, when the vehicle 10 approaching the muddy uphill road segment 226, the processing circuitry 102 of the computer system 100 controls the vehicle 10 based on the adapted driving mode and the adapted load capacity of the vehicle 10 in order to reduce energy consumption, increase productivity and reduce wear and tear of the vehicle 10.

The processing circuitry 102 may optionally also determine to engage the differential locks 18. The processing circuitry 102 may in some situations also determine to include an adjustment of the steering mode, e.g. determine only to steer on the rear axle 12 moving uphill. As mentioned herein, this is obtained by controlling one or more of the front and rear steering devices 24, 26 based on the determined steering mode.

In another example, the processing circuitry 102 determines that the traction force distribution at the muddy uphill road segment 226 is adapted to an adapted driving mode in which the propulsion unit transfers about 5% to 15% more traction force on the rear axle 12 in comparison to the traction force on the front axle 11 when moving uphill.

In another examples, although not illustrated, the adapted driving mode further includes that the differential lock 18 of the front axle 11 is controlled by the processing circuitry 102, which here commands the differential lock 18 to automatically engage before entering a difficult hill, such as the muddy uphill road segment 226 of FIG. 3.

Optionally, the processing circuitry 102 is here also configured to control the differential lock 18 to distribute the torque between opposite wheels of front axle 11. For example, the processing circuitry is 102 configured to control the differential lock 18 to distribute the torque between the left wheel and the right wheel of the front axle 11.

The above example in relation to FIG. 3 is only a brief example of the disclosure for the ease of describing and illustrating the operations of the proposed computer system 100 and the methods herein.

As described above, the computer system 100 of FIG. 3 is e.g. a part of a remote server (i.e. the central server), while further being configured to be in communication with a corresponding computer systems 100' of the vehicle 10. The remote server is e.g. a centralized controller.

Moreover, it should be noted that the above example with the normal force is a simplified example for the purpose of describing the relationship between the normal force and the road inclination. The processing circuitry 102 may typically also take other factors into account such as acceleration and retardation of the vehicle 10.

In addition, as mentioned above, the distribution of traction force between the two axles 11, 12 of the vehicle 10 is based on determined road gradient / road inclination, predicted risk of wheel slip and payload data. Such examples can be implemented by the processing circuitry 102 in combination with onboard sensors, such as an IMU for detecting the road gradient, and a load sensor (not illustrated) configured to detect whether the vehicle 10 is loaded or not. Alternatively, or in addition, the processing circuitry 102 may be arranged in the central control system (part of the computer system 100) for the vehicles 10 and the confined geographical area 200, wherein the processing circuitry 102 is configured to utilizes site management data, such as gradient information from the predefined vehicle pathway 220 and load data reported from a load weighing system on a loader arranged in the confined geographical area 200. The processing circuitry 102 of the central control system (part of the computer system 100) can also engage the differential lock if deemed necessary due to a determined steepness of the vehicle pathway 220 and/or the predicted risk of the wheel slip along the vehicle pathway 220.

As such, in an example where the computer system 100 is arranged, partly or entirely, in the remote server, e.g. as a central control system (part of the computer system 100) for the vehicles 10, the processing circuitry 102 is configured to collect data from the vehicles 10 on the site within the confined geographical area 200 via e.g. a wireless interface. The processing circuitry 102 is also configured to define and generate the transport mission to the vehicles 10, which together with the above determined adapted driving mode and load capacity form the basis for the control commands for the vehicles 10 along the vehicle pathway 220.

To this end, the parts of the computer system 100, including one or more processing circuitry and control units, may be comprised in a single vehicle 10, in a plurality of vehicles and/or be comprised in any other suitable location. The processing circuitry 102 of the computer system 100 may be communicatively connected with any one of one or more sensors of the vehicles 10, sensors within the confined geographical area 200, the GNSS, and the wireless network 40. The processing circuitry 102 may further be able to actuate the navigation of the autonomous vehicles 10, or at least be able to provide commands to the autonomous vehicles 10. The processing circuitry 102 may also be configured to feed additional motion commands to the vehicle 10 for realizing the route associated with the transport mission.

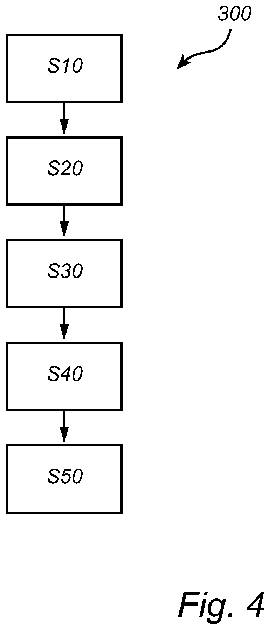

FIG. 4 is a flow chart of an exemplary method to control a vehicle 10 according to an example. More specifically, FIG. 4 is an exemplary computer implemented method 300 according to an example. Thus the method 300 is implemented by the computer system 100 and the processing circuitry 102, as described herein. The computer-implemented method 300 is intended for controlling one or more vehicles 10, 10a to $10\eta$ operating in the confined geographical area 200.

As illustrated in FIG. 4, the method comprises a step S10 of receiving travel mission data for at least one vehicle 10a of the plurality of vehicles 10, 10a to $10\eta$ within the confined geographical area 200, the travel mission data comprising at least data about the intended route 220 for completing the transport mission 212. The processing circuitry 102 of the computer system 100 is configured to implement the step S10.

Moreover, the method comprises a step S20 of obtaining of real-time road condition data for the intended route 220. The processing circuitry 102 is configured to implement the step S20.

In addition, the method 300 comprises a step S30 of determining a drivability impact for the at least one of the vehicles 10a intended to perform the travel mission along the intended route 220 based on the obtained real-time road condition data. The drivability impact is indicative of a decrease in any one of a vehicle traction control level and an energy efficiency level. The processing circuitry 102 is configured to implement the step S30.

Subsequently, the method comprises a step S40 of adapting any one of a driving mode and load capacity for the travel mission for at least one vehicle 10a in response to the determined drivability impact. The processing circuitry 102 is configured to implement the step S40.

Then, the method 300 comprises a step S50 of controlling the at least one vehicle 10a based on any one of the adapted driving mode and load capacity for the travel mission. The processing circuitry 102 is configured to implement the step S50.

In some examples, there is provided a computer program product comprising program code for performing, when executed by the processing circuitry 102, the method 300 as described above.

In some examples, there is provided a non-transitory computer-readable storage medium comprising instructions, which when executed by the processing circuitry 102, cause the processing circuitry 102 to perform the method 300 as described above.

Further details of one example of a computer system that can be used as the computer system 100 will now be described in relation to FIG. 5.

FIG. 5 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system 100 for controlling one or more vehicles 10, 10a to $10\eta$ operating in a confined geographical area 200, the computer system 100 comprising processing circuitry 102 configured to: receive travel mission data for at least one vehicle 10a of a plurality of vehicles 10, 10a to 10n within the confined geographical area 200, the travel mission data comprising at least data about an intended route 220 for completing a transport mission 212; obtain real-time road condition data for the intended route 220; based on the obtained real-time road condition data, determine a drivability impact for the at least one vehicle 10a intended to perform the travel mission along the intended route 220, the drivability impact being indicative of an estimated decrease in any one of a vehicle traction control level and an energy efficiency level; in response to the determined drivability impact, adapt any one of a driving mode and load capacity for the travel mission for the at least one vehicle 10a; and control the at least one vehicle 10a based on any one of the adapted driving mode and adapted load capacity for the travel mission.

Example 2: Computer system 100 of example 1, wherein the processing circuitry 102 is configured to obtain real-time road condition data for the intended route 220 from any one of the vehicle 10, 10a intended to perform the travel mission and a central control server in communication with the processing circuitry 102.

Example 3. Computer system 100 of example 1 or example 2, wherein, based on the obtained real-time road condition data, the processing circuitry 102 is further configured to determine a drivability impact for at least one additional vehicle 10b among the plurality of vehicles 10, 10a to 10n, in response to the determined drivability impact for the at least one additional vehicle 10b, adapt any one of a driving mode and load capacity for the travel mission for the at least one additional vehicle 10b; and control the at least one vehicle 10a and the at least one additional vehicle 10b in accordance with respective adapted driving mode and adapted load capacity for the travel mission.

Example 4. Computer system 100 of any previous examples, wherein the drivability impact being indicative of an estiamted decrease in vehicle traction control level is any one of an increase in wheel slip and a decrease in a ratio between torque requirement and acceleration on a traction electric machine.

Example 5. Computer system 100 of any previous claims, wherein the energy efficiency level is determined from energy consumption data for performing the transport mission 212.

Example 6. Computer system 100 of any previous claims, wherein the processing circuitry 102 is configured to adapt the driving mode by adapting a traction force distribution between a front axle and a rear axle.

Example 7. Computer system 100 of claim 6, wherein the processing circuitry 102 is configured to adapt the traction force distribution between the front axle and rear axle by controlling a differential lock device 18.

Example 8. Computer system 100 of any previous claims, wherein the processing circuitry 102 is configured to adapt the driving mode by adapting a maximum steering angle of the steering wheels.

Example 9. Computer system 100 of any previous claims, wherein the processing circuitry 102 is configured to adapt the load capacity by reducing a maximum allowable load level.

Example 10. Computer system 100 of any previous claims, wherein the processing circuitry 102 is configured to determine at least one vehicle pathway characteristic for the intended route 220 for the transport mission 212 based on topology data.

Example 11. Computer system 100 of any previous claims, wherein the travel mission data further comprises data indicative of at least a destination location and a destination time.

Example 12. Computer system 100 of any previous claims, wherein the processing circuitry 102 is configured to determine the decrease in any one of the vehicle traction control level and the energy efficiency level based on an estimation of an absolute value of any one of the vehicle traction control level and the energy efficiency level.

Example 13. Computer system 100 of any previous claims, wherein the processing circuitry 102 is configured to determine the decrease in any one of the vehicle traction control level and the energy efficiency level based on a comparison with a nominal value associated with normal driving conditions.

Example 14. Computer system 100 of any previous claims, wherein the plurality of vehicles 10, 10a to 10n comprises a first vehicle and a second vehicle, the at least one vehicle being the second vehicle 10a, and wherein the processing circuitry 102 is configured to control the first vehicle according to a first route so that the first vehicle is controlled to establish a first track along the road surface of the first route, and further configured to control the second vehicle 10a so as to follow the first track of the first vehicle.

Example 15. Computer system 100 of claim 14, wherein a lateral offset of a track for the second vehicle 10a is adjusted in response to any one of the first track of the first vehicle and the obtained real-time road condition data for the first vehicle.

Example 16. A vehicle 1 comprising a computer system 100 of any of claims 1-15.

Example 17. A computer-implemented method 300 for controlling one or more vehicles 10, 10a to 10n operating in a confined geographical area 200, the method comprising: receiving S10, by a processing circuitry 102 of a computer system 100, travel mission data for at least one vehicle 10a of a plurality of vehicles 10, 10a to 10η within the confined geographical area 200, the travel mission data comprising at least data about an intended route 220 for completing a transport mission 212; obtaining S20, by the processing circuitry 102 of the computer system 100, real-time road condition data for the intended route 220; based on the obtained real-time road condition data, determining S30, by the processing circuitry 102 of the computer system 100, a drivability impact for the at least vehicle 10a intended to perform the travel mission along the intended route 220, the drivability impact being indicative of a decrease in any one of a vehicle traction control level and an energy efficiency level; in response to the determined drivability impact, adapting S40, by the processing circuitry 102 of the computer system 100, any one of a driving mode and load capacity for the travel mission for the at least one vehicle 10a; and controlling S50, by the processing circuitry 102 of the computer system 100, the at least one vehicle 10a based on any one of the adapted driving mode and load capacity for the travel mission.

Example 18. A computer program product comprising program code for performing, when executed by the processing circuitry 102 of any of claims 1-15, the method of claim 17.

Example 19. A non-transitory computer-readable storage medium comprising instructions, which when executed by the processing circuitry 102 of any of claims 1-15, cause the processing circuitry 102 to perform the method of claim 17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (100) for controlling one or more vehicles (10, 10a to 10n) operating in a confined geographical area (200), the computer system comprising processing circuitry (102) configured to:

   - receive travel mission data for at least one vehicle (10a) of a plurality of vehicles within the confined geographical area, the travel mission data comprising at least data about an intended route (220) for completing a transport mission;
   - obtain real-time road condition data for the intended route;
   - based on the obtained real-time road condition data, determine a drivability impact for the at least one vehicle (10a) intended to perform the travel mission along the intended route, the drivability impact being indicative of an estimated decrease in any one of a vehicle traction control level and an energy efficiency level;
   - in response to the determined drivability impact, adapt any one of a driving mode and load capacity for the travel mission for the at least one vehicle (10a); and
   - control the at least one vehicle (10a) based on any one of the adapted driving mode and adapted load capacity for the travel mission.

2. Computer system of claim 1, wherein, based on the obtained real-time road condition data, the processing circuitry is further configured to determine a drivability impact for at least one additional vehicle among the plurality of vehicles, in response to the determined drivability impact for the at least one additional vehicle, adapt any one of a driving mode and load capacity for the travel mission for the at least one additional vehicle; and control the at least one vehicle and the at least one additional vehicle in accordance with respective adapted driving mode and adapted load capacity for the travel mission.

3. Computer system of any previous claims, wherein the drivability impact being indicative of an estimated decrease in vehicle traction control level is any one of an increase in wheel slip and a decrease in a ratio between torque requirement and acceleration on a traction electric machine.

4. Computer system of any previous claims, wherein the energy efficiency level is determined from energy consumption data for performing the transport mission.

5. Computer system of any previous claims, wherein the processing circuitry is configured to adapt the driving mode by adapting a traction force distribution between a front axle (11) and a rear axle (12, 13).

6. Computer system of claim 5, wherein the processing circuitry is configured to adapt the traction force distribution between the front axle and rear axle by controlling a differential lock device (18).

7. Computer system of any previous claims, wherein the processing circuitry is configured to adapt the driving mode by adapting a maximum steering angle of a steering device for one or more wheels.

8. Computer system of any previous claims, wherein the processing circuitry is configured to adapt the load capacity by reducing a maximum allowable load level.

9. Computer system of any previous claims, wherein the processing circuitry is configured to determine at least one vehicle pathway characteristic for the intended route for the transport mission based on topology data.

10. Computer system of any previous claims, wherein the travel mission data further comprises data indicative of at least a destination location and a destination time.

11. Computer system of any previous claims, wherein the processing circuitry is configured to estimate the decrease in any one of the vehicle traction control level and the energy efficiency level based on a comparison with a nominal value associated with normal driving conditions.

12. Computer system of any previous claims, wherein the plurality of vehicles comprises a first vehicle and a second vehicle, the at least one vehicle being the second vehicle, and wherein the processing circuitry is configured to control the first vehicle according to a first route so that the first vehicle is controlled to establish a first track along the road surface of the first route, and further configured to control the second vehicle so as to follow the first track of the first vehicle.

13. Computer system of claim 12, wherein a lateral offset of a corresponding track for the second vehicle 10a is adjusted in response to any one of the first track of the first vehicle and real-time road condition data for the first vehicle.

14. A vehicle (1) comprising a computer system of any of claims 1-13.

15. A computer-implemented method (300) for controlling one or more vehicles (10, 10a to 10n) operating in a confined geographical area (200), the method comprising:

- receiving (S10), by a processing circuitry of a computer system, travel mission data for at least one vehicle (10a) of a plurality of vehicles within the confined geographical area, the travel mission data comprising at least data about an intended route (220) for completing a transport mission (212);
- obtaining (S20), by the processing circuitry of the computer system, real-time road condition data for the intended route;
- based on the obtained real-time road condition data, determining (S30), by the processing circuitry of the computer system, a drivability impact for at least one vehicle intended to perform the travel mission along the intended route, the drivability impact being indicative of a decrease in any one of a vehicle traction control level and an energy efficiency level;

- in response to the determined drivability impact, adapting (S40), by the processing circuitry of the computer system, any one of a driving mode and load capacity for the travel mission for the at least one vehicle (10a); and
- controlling (S50), by the processing circuitry of the computer system, the at least one vehicle (10a) based on any one of the adapted driving mode and load capacity for the travel mission.

16. A computer program product comprising program code for performing, when executed by the processing circuitry of any of claims 1-13, the method of claim 15.

17. A non-transitory computer-readable storage medium comprising instructions, which when executed by the processing circuitry of any of claims 1-13, cause the processing circuitry to perform the method of claim 15.

Fig. 1A

Fig. 1B

*Fig. 1C*

*Fig. 2*

*Fig. 3*

300

```
┌─────────────┐
│     S10     │
└─────────────┘
       │
       ▼
┌─────────────┐
│     S20     │
└─────────────┘
       │
       ▼
┌─────────────┐
│     S30     │
└─────────────┘
       │
       ▼
┌─────────────┐
│     S40     │
└─────────────┘
       │
       ▼
┌─────────────┐
│     S50     │
└─────────────┘
```

*Fig. 4*

*Fig. 5*

Europäisches
Patentamt

European
Patent Office

Office européen
des brevets

# EUROPEAN SEARCH REPORT

**Application Number**

EP 24 18 1873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/367323 A1 (OBARA HIROKI [JP] ET AL) 16 November 2023 (2023-11-16) | 1,2,5,6, 9-12, 14-17 | INV. B60W50/00 B60W60/00 |
| A | * paragraphs [0006] - [0007], [0017], [0051], [0067], [0095]; figure 5 * ----- | 4,7,13 | G08G1/0968 |
| X | US 2009/248221 A1 (O'NEAL STEVEN WAYNE [US]) 1 October 2009 (2009-10-01) | 1,2,8, 14-17 | |
| A | * paragraphs [0009], [0030] - [0050] * ----- | 4,7,13 | |
| A | EP 3 932 762 B1 (GREAT WALL MOTOR CO LTD [CN]) 1 November 2023 (2023-11-01) * paragraph [0064] * ----- | 7 | |
| A | US 2023/278557 A1 (BANDO MIKIO [JP] ET AL) 7 September 2023 (2023-09-07) * the whole document * ----- | 1-17 | |

**TECHNICAL FIELDS SEARCHED (IPC)**

B60W
G08G

The present search report has been drawn up for all claims

| Place of search | Date of completion of the search | Examiner |
|---|---|---|
| Munich | 28 November 2024 | Stolle, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 1873

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2024

| Patent document cited in search report | | | Publication date | Patent family member(s) | | Publication date |
|---|---|---|---|---|---|---|
| US 2023367323 | A1 | | 16-11-2023 | CN 116420122 | A | 11-07-2023 |
| | | | | EP 4224269 | A1 | 09-08-2023 |
| | | | | JP 7011015 | B1 | 26-01-2022 |
| | | | | JP 2022057297 | A | 11-04-2022 |
| | | | | US 2023367323 | A1 | 16-11-2023 |
| | | | | WO 2022070504 | A1 | 07-04-2022 |
| US 2009248221 | A1 | | 01-10-2009 | NONE | | |
| EP 3932762 | B1 | | 01-11-2023 | CN 110949370 | A | 03-04-2020 |
| | | | | EP 3932762 | A1 | 05-01-2022 |
| | | | | WO 2020187259 | A1 | 24-09-2020 |
| US 2023278557 | A1 | | 07-09-2023 | CN 115812185 | A | 17-03-2023 |
| | | | | EP 4220328 | A1 | 02-08-2023 |
| | | | | JP 7034225 | B1 | 11-03-2022 |
| | | | | JP 2022054261 | A | 06-04-2022 |
| | | | | US 2023278557 | A1 | 07-09-2023 |
| | | | | WO 2022064767 | A1 | 31-03-2022 |

EPO FORM P0459

For more details about this annex : see Official Journal of the European Patent Office, No. 12/82